# FASCICULE DE BREVET EUROPEEN

(11) **EP 2 041 454 B1**
(45) Date de publication et mention de la délivrance du brevet: **15.09.2010**
(21) Numéro de dépôt: 07823529.8
(22) Date de dépôt: 02.07.2007
(51) Int. Cl.: F16H 61/40, B60K 6/12

(54) **CIRCUIT HYDRAULIQUE DE RECUPERATION D'ENERGIE**
HYDRAULISCHES ENERGIERÜCKGEWINNUNGSSYSTEM
HYDRAULIC ENERGY RECOVERY SYSTEM

(30) Priorité: 03.07.2006 FR 0652763
(43) Date de publication de la demande: 01.04.2009
(73) Titulaire: Poclain Hydraulics Industrie, 60411 Verberie (FR)
(72) Inventeur: HEREN, Jean, 60280 Margny les Compiegne (FR); LEMAIRE, Gilles, 60280 Margny Les Compiègnes (FR); VIARD, Julien, 60700 Pontpoint (FR)
(74) Mandataire: Intes, Didier Gérard André
(86) Numéro de dépôt international: PCT/FR2007/051573
(87) Numéro de publication internationale: WO 2008/003895

(56) Documents cités:
- EP-A- 1 589 264
- GB-A- 1 214 511
- GB-A- 2 065 836

## Description

La présente invention concerne un circuit hydraulique de récupération d'énergie, comprenant au moins un moteur hydraulique, deux conduits principaux pour l'alimentation en fluide ou l'échappement dudit au moins un moteur, une source de fluide à basse pression, un accumulateur haute pression formant une source de fluide à haute pression, et des moyens de valve aptes à adopter une configuration de récupération d'énergie dans laquelle lesdits moyens de valve relient respectivement le conduit principal d'alimentation à la source de fluide à basse pression et le conduit principal d'échappement à l'accumulateur haute pression, et une configuration de restitution d'énergie dans laquelle lesdits moyens de valve relient respectivement le conduit principal d'alimentation à l'accumulateur haute pression et le conduit principal d'échappement à la source de fluide à basse pression.

On connaît de tels circuits équipant des véhicules pour limiter leur consommation d'énergie en particulier de EP 1589264 A. Il s'agit de véhicules dit « hybrides », comportant un moteur de propulsion classique (par exemple de type thermique) et un circuit du type précité, dont le ou les moteurs hydrauliques peuvent être mécaniquement liés au dispositif de propulsion, par exemple en étant liés à la sortie de ce dispositif, ou bien à une roue du véhicule. En régime de croisière, le véhicule est normalement entraîné par son moteur de propulsion classique. La récupération de l'énergie intervient dans une phase de freinage, pendant laquelle le moteur hydraulique est entraîné par la propulsion du véhicule en cours de freinage, pour fonctionner comme une pompe et alimenter l'accumulateur haute pression en fluide. La restitution d'énergie intervient en particulier lors d'une phase d'accélération du véhicule, pendant laquelle le moteur hydraulique est à nouveau activé et est alimenté par le fluide à haute pression provenant de l'accumulateur, pour fournir un couple moteur d'assistance à la propulsion du véhicule.

On connaît l'intérêt de tels systèmes « hydrides » pour diminuer la consommation en carburant.

Pour que ce système soit réellement efficace, il faut que le moteur hydraulique ne produise pas de couple résistant significatif lorsqu'il est désactivé, et que la commande des différentes configurations du moteur soit simple et rapide, et utilise des moyens de commande peu encombrants et peu coûteux.

La présente invention vise à améliorer l'état de la technique pour atteindre les objectifs précités.

Ce but est atteint grâce au fait que le moteur hydraulique est apte à être débrayé ou à être embrayé par pression de fluide, que les moyens de valve comprennent une valve hydraulique comprenant un corps de valve ayant une voie d'alimentation reliée au conduit principal d'alimentation, une voie d'échappement reliée au conduit principal d'échappement, une voie de liaison basse pression reliée à la source de fluide à basse pression, une voie de liaison haute pression reliée à l'accumulateur haute pression et une voie auxiliaire, ainsi qu'un tiroir apte à occuper dans le corps une position neutre dans laquelle les voies d'alimentation et d'échappement communiquent entre elles et avec la voie auxiliaire, une position de récupération d'énergie dans laquelle la voie d'alimentation est reliée à la voie de liaison basse pression tandis que la voie d'échappement est reliée à la voie de liaison haute pression, et une position de restitution d'énergie dans laquelle la voie d'alimentation est reliée à la voie de liaison haute pression tandis que la voie d'échappement est reliée à la voie de liaison basse pression, et que le circuit comprend des moyens de commande et de sélection aptes à provoquer un déplacement du tiroir de sa position neutre vers sa position de récupération d'énergie à réception d'un premier signal de commande, à provoquer un déplacement du tiroir de sa position neutre vers sa position de restitution d'énergie à réception d'un deuxième signal de commande, et à provoquer le raccordement de la voie auxiliaire avec une enceinte sans surpression ou avec une source de fluide d'embrayage du moteur hydraulique à réception d'un signal de sélection.

Le moteur hydraulique comporte des pistons, en particulier orientés radialement par rapport à l'axe de rotation de son rotor, qui coopèrent avec une came pour produire le couple moteur. L'embrayage du moteur consiste à placer les pistons en contact avec la came, tandis que son débrayage consiste à les en écarter. On comprend que, à l'état débrayé, le moteur ne produit pas de couple résistant. Les moyens de valve comprennent, dans une même valve hydraulique un tiroir déplaçable dans le corps de valve, entre des positions correspondant aux configurations de récupération d'énergie et de restitution d'énergie ainsi que dans une position neutre dans laquelle, selon que la voie auxiliaire est reliée à l'enceinte sans surpression ou à la source de fluide d'embrayage, le moteur peut être débrayé ou embrayé. Les moyens permettant d'obtenir ces différentes positions sont donc extrêmement compacts et peuvent être réalisés pour un coût raisonnable. La commande entre les différentes configurations est simple puisque l'émission des signaux de commande permet l'obtention des configurations de récupération d'énergie ou de restitution d'énergie et que le signal de sélection permet le passage entre les configurations embrayées et débrayées du moteur.

Avantageusement, la position neutre du tiroir est intermédiaire entre les positions de récupération d'énergie et de restitution d'énergie.

Ceci permet de repasser très rapidement de la position neutre à l'une des positions de récupération ou de restitution d'énergie.

Avantageusement, la valve hydraulique présente une première chambre de commande apte à être alimentée en fluide par une première voie de commande pour solliciter un déplacement du tiroir vers sa position de récupération d'énergie et une deuxième chambre de commande apte à être alimentée en fluide par une deuxième voie de commande pour solliciter un déplacement du tiroir vers sa position de restitution d'énergie, et le circuit comprend des moyens d'électrovalve aptes à relier les deux voies de commande à une enceinte sans surpression en l'absence de signal de commande, à relier la première voie de commande à une source de fluide de pilotage à réception du premier signal de commande et à relier la deuxième voie de commande à la source de fluide de pilotage à réception du deuxième signal de commande.

Ces moyens de commande de la valve hydraulique sont simples et fiables, et d'un coût de construction raisonnable.

Avantageusement, les moyens d'électrovalve comprennent une première électrovalve de pilotage apte, en position de repos, à raccorder la première voie de commande à l'enceinte sans surpression et, en position activée, à raccorder cette première voie à la source de fluide de pilotage, ainsi qu'une deuxième électrovalve de pilotage apte, en position de repos, à raccorder la deuxième voie de commande à l'enceinte sans surpression et, en position activée, à raccorder cette deuxième voie à la source de fluide de pilotage.

La voie auxiliaire est avantageusement l'une des voies de commande.

Ainsi, le fluide de pilotage sert également de fluide d'embrayage, simplifiant ainsi le circuit.

Il est alors avantageux que les moyens d'électrovalve soient aptes à relier les deux voies de commande à la source de fluide de pilotage à réception conjointe des premier et deuxième signaux de commande émis ensemble.

Cette réception conjointe permet d'obtenir la position neutre et l'embrayage du moteur, tandis que cette position neutre est obtenue à l'état débrayé du moteur alors qu'aucun de ces deux signaux n'est émis.

En variante, le circuit comprend avantageusement une électrovalve de débrayage apte à adopter une position de débrayage dans laquelle elle raccorde la voie auxiliaire à une enceinte sans surpression et une position d'embrayage dans laquelle elle raccorde la voie auxiliaire à la source de fluide d'embrayage.

Dans ce cas, le débrayage est obtenu par l'électrovalve de débrayage spécifique, qui est commandé indépendamment de l'alimentation des voies de commande de la valve hydraulique.

Avantageusement, l'espace intérieur du carter du ou des moteurs hydrauliques est mis en pression, par exemple en étant relié à la source de fluide d'embrayage par l'intermédiaire d'une restriction.

Cette mise en pression permet le passage de l'état embrayé du moteur à son état débrayé, car la pression à l'intérieur du carter tend à repousser les pistons vers le fond de leur cylindre. Ainsi, qu'il est connu, d'autres systèmes pourraient être utilisés pour repousser ces pistons, par exemple des ressorts.

Le fait de réaliser la mise en pression de l'espace intérieur du carter à partir de la source de fluide d'embrayage mais par l'intermédiaire d'une restriction permet, de manière certaine, d'obtenir dans cet espace intérieur une pression inférieure à celle qui est utilisée pour réaliser l'embrayage grâce à la perte de charge réalisée par la restriction, sans toutefois nécessiter l'utilisation d'une autre source de fluide.

Le circuit de l'invention, équipant un véhicule ayant un dispositif de propulsion auquel ledit au moins un moteur hydraulique est apte à être mécaniquement lié, peut être commandé par un procédé qui comprend au moins les étapes de commande suivantes :
- on émet le premier signal de commande pour réaliser, lors d'une décélération du véhicule entraîné par le dispositif de propulsion, une phase de récupération d'énergie pendant laquelle ledit au moins un moteur hydraulique est embrayé,
- on cesse l'émission du premier signal de commande pour réaliser une phase d'équilibrage dans laquelle les conduits principaux d'alimentation et d'échappement communiquent,
- on émet le deuxième signal de commande pour réaliser, lors d'une accélération du véhicule entraîné conjointement par le dispositif de propulsion et ledit au moins un moteur hydraulique, une phase de restitution d'énergie dans laquelle le moteur hydraulique est embrayé,
- on cesse l'émission du deuxième signal de commande pour réaliser une phase d'attente dans laquelle les conduits principaux d'alimentation et d'échappement communiquent et dans laquelle ledit au moins un moteur hydraulique est débrayé.

Lors de la phase de décélération du véhicule, le moteur fonctionne en pompe de sorte que le conduit principal d'alimentation est à une pression inférieure à celle à laquelle se trouve le conduit principal d'échappement, qui alimente alors l'accumulateur haute pression. En revanche, les états de pression sont inversés lors de la phase de restitution d'énergie, dans laquelle le conduit d'alimentation est à une pression plus élevée que le conduit d'échappement. La réalisation de la phase d'équilibrage entre les phases de récupération d'énergie et de restitution d'énergie permet d'équilibrer les pressions dans les conduits principaux d'alimentation et d'échappement du moteur, évitant ainsi que l'inversion des pressions précitées ne s'opère de manière trop brutale.

Avantageusement, la phase d'équilibrage comprend une première période pendant laquelle ledit au moins un moteur hydraulique reste embrayé et, si la fin de cette première période est constatée, cette première période est suivie par une deuxième période pendant laquelle ledit au moins un moteur hydraulique est débrayé et à la fin de laquelle ledit au moins un moteur hydraulique est embrayé à nouveau.

Le fait que le moteur reste embrayé pendant la première période de la phase d'équilibrage permet de passer très rapidement à la phase de restitution d'énergie ou à une autre phase de récupération d'énergie si cela est nécessaire. Si, en revanche, la fin de la première période est constatée avant qu'il ne soit nécessaire de passer à la phase de restitution d'énergie, le débrayage du moteur hydraulique permet d'éviter de surcharger inutilement ce dernier et surtout d'éviter de générer un couple de traînée occasionnant des pertes de rendement.

Par exemple, la fin de la première période est constatée en comparant la durée écoulée de la phase d'équilibrage à une durée de référence, qui peut être une durée prédéterminée, ou bien la durée de décélération ou encore une fraction de cette dernière. Elle peut également être constatée lorsqu'une pression désirée pour la charge de l'accumulateur haute pression est atteinte.

Avantageusement, pour embrayer ledit au moins un moteur hydraulique, on raccorde la voie auxiliaire de la valve hydraulique avec la source de fluide d'embrayage, et on maintient le raccordement entre la voie auxiliaire et la source de fluide d'embrayage pendant l'une au moins des phases de récupération et de restitution d'énergie.

Ceci permet de faire en sorte que le moteur reste embrayé, sans nécessiter l'émission d'un signal de commande particulier, à la fin de la phase de récupération et/ou de restitution d'énergie pendant laquelle le raccordement entre la voie auxiliaire et la source de fluide d'embrayage a été maintenu. On évite ainsi en particulier un bref passage par un débrayage ou un début de débrayage après cette phase, lorsque la phase d'équilibrage commence.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
- la figure 1A montre un circuit hydraulique conforme à l'invention, selon un premier mode de réalisation, alors que le tiroir de la valve hydraulique est dans sa position neutre et que le moteur hydraulique est débrayé ;
- la figure 1B montre le même circuit, alors que le tiroir est toujours dans sa position neutre, mais que le moteur est embrayé ;
- la figure 1C montre ce circuit pendant la phase de récupération d'énergie ;
- la figure 1D montre ce circuit à l'issue de la phase de récupération d'énergie, alors que le tiroir est revenu dans sa position neutre ;
- la figure 1E montre ce circuit lors de la phase de restitution d'énergie ;
- la figure 2A montre un circuit selon un deuxième mode de réalisation, alors que le tiroir est dans sa position neutre et que le moteur est débrayé ; et
- les figures 2B, 2C et 2D montrent ce circuit dans des situations correspondant respectivement à celles des figures 1B, 1C et 1E.

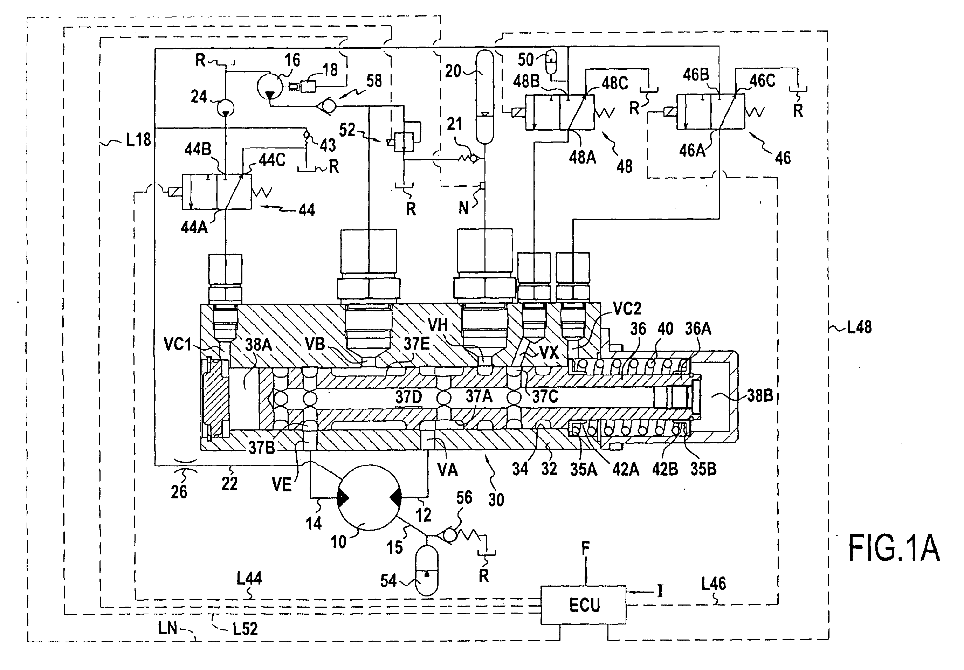

Le circuit représenté sur les figures 1A à 1E comprend un moteur hydraulique 10 avec deux conduits principaux, respectivement 12 et 14 pour assurer son alimentation en fluide ou son échappement. Il comprend également une source de fluide à basse pression 16 qui, en l'espèce, est formé par une pompe de gavage haut débit. Cette pompe est choisie pour pouvoir délivrer un débit de fluide suffisant pour assurer l'alimentation en fluide du moteur hydraulique alors que celui-ci est à vitesse maximale, dans la configuration de récupération d'énergie. Si plusieurs moteurs sont présents dans le circuit, on utilise avantageusement une même pompe de gavage haut débit, dimensionné pour délivrer le débit de fluide suffisant pour assurer l'alimentation sans cavitation des différents moteurs lorsqu'ils sont en vitesse maximale dans cette configuration.

Des moyens sont prévus pour activer ou désactiver la pompe 16. En l'espèce, elle est équipée d'un embrayage électromagnétique 18.

Le circuit comporte également une source de fluide à haute pression, formée par un accumulateur 20.

On pourrait également faire fonctionner le circuit en utilisant, comme source de fluide à basse pression, un accumulateur basse pression du type connu en soi. Toutefois, le recours, pour former la source de fluide à basse pression, à la pompe 16 précitée présente certains avantages, liés en particulier à la compacité de cette pompe par rapport à l'encombrement qu'aurait un accumulateur basse pression devant délivrer un volume de fluide suffisamment important pour charger convenablement l'accumulateur haute pression.

Le moteur 10 est du type embrayable et débrayable. Il s'agit par exemple d'un moteur hydraulique à pistons radiaux. Pour permettre le passage en configuration débrayée, c'est-à-dire le rappel des pistons du moteur vers le fond de leurs cylindres, l'espace intérieur du carter du moteur est mis en pression alors que les conduits principaux du moteur sont reliés à une enceinte sans surpression (réservoir) ou à une pression sensiblement inférieure à la pression du carter du moteur. A cet effet, une conduite 22 raccordée à une source de pression débouche dans l'espace intérieur du carter. En l'espèce, la source de pression utilisée est une pompe 24 qui, comme on le verra dans la suite, est également la source de fluide d'embrayage, à laquelle l'espace intérieur du carter du moteur est relié par l'intermédiaire d'une restriction 26 disposée sur la conduite 22.

Le circuit comprend une valve hydraulique 30 qui comprend un corps de valve 32 présentant un alésage interne 34 à l'intérieur duquel un tiroir 36 est monté coulissant.

Le corps de valve 32 a une voie d'alimentation VA reliée au conduit principal d'alimentation 12, une voie d'échappement VE reliée au conduit principal d'échappement 14, une voie de liaison basse pression VB reliée à la source de fluide à basse pression 16, une voie de liaison haute pression VH reliée à l'accumulateur haute pression 20 et une voie auxiliaire VX qui est reliée à une conduite auxiliaire. La valve hydraulique 30 présente encore une première chambre de commande 38A reliée à une première voie de commande VC1 et une deuxième chambre de commande 38B, reliée à une deuxième voie de commande VC2.

Sur la figure 1A, le tiroir 36 est représenté dans sa position neutre, dans laquelle il est rappelé en permanence par un ressort 40, de sorte que le tiroir occupe sa position neutre quand la pression de fluide dans les chambres de commande 38A et 38B est égale ou sensiblement égale. On voit en l'espèce que le ressort 40 est disposé autour d'une extrémité 36A du tiroir, entre deux bagues d'arrêt, respectivement 42A et 42B, fixées sur le tiroir. L'alésage 34 du corps de valve présente quant à lui deux épaulements, respectivement 35A et 35B, contre lesquels les bagues d'arrêt 42A et 42B sont aptes à venir en butée respectivement.

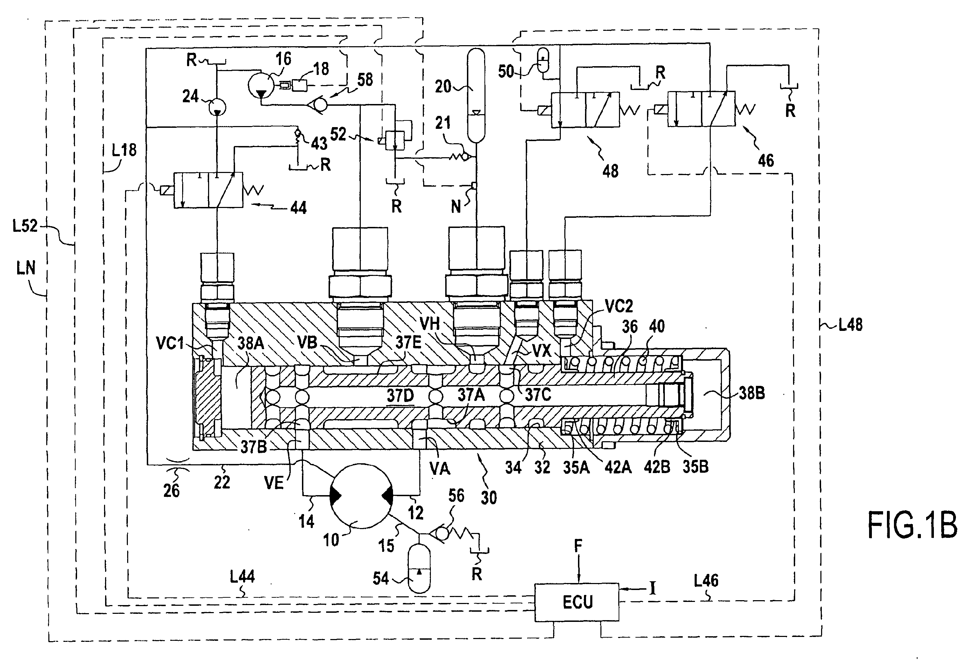

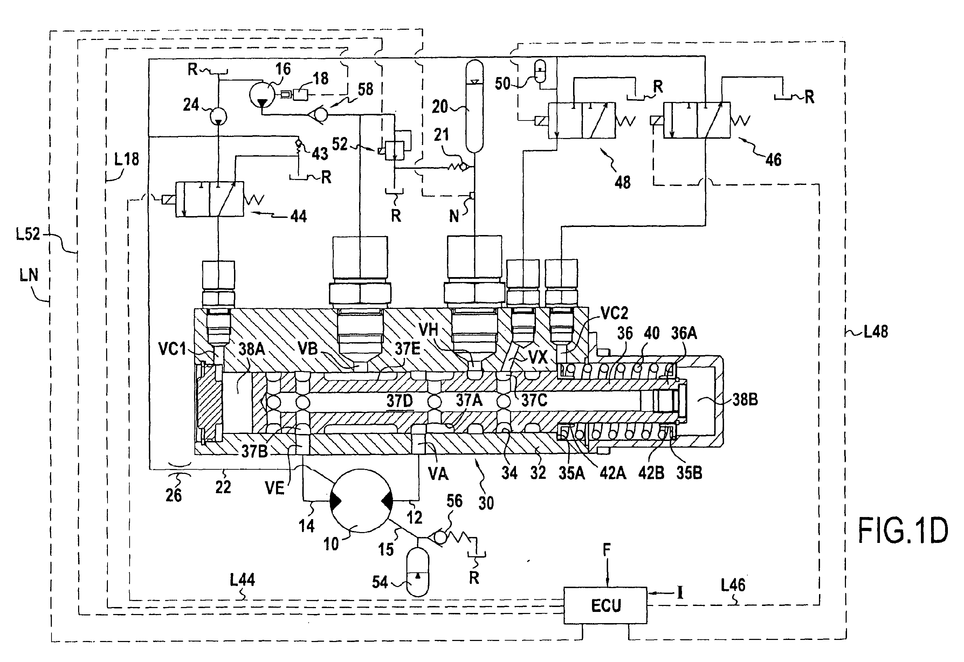

Ainsi, dans la position neutre du tiroir visible sur les figures 1A, 1B et 1D, les bagues 35A et 35B sont en butée contre les deux épaulements. Dans la configuration de récupération d'énergie, la bague d'arrêt 42A est éloignée de l'épaulement 35A tandis que la bague d'arrêt 42B coopère avec l'épaulement 35B. En effet, le tiroir a été placé dans une première position extrême (en l'espèce, vers la droite) par une augmentation de la pression dans la chambre de commande 38A dont le volume a augmenté.

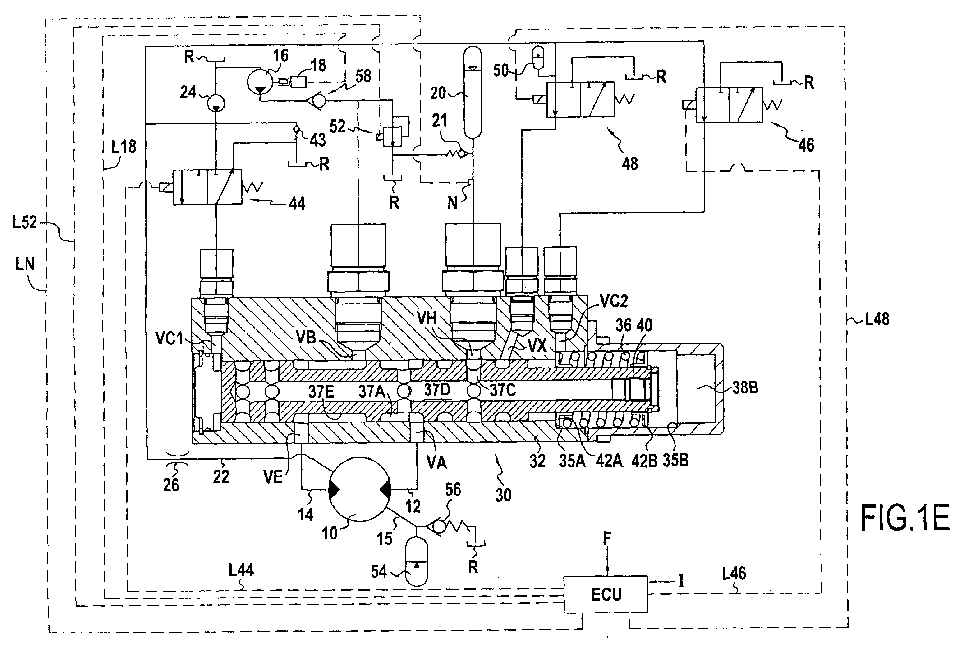

A l'inverse, dans la configuration de restitution d'énergie représentée sur la figure 1E, la bague 42A coopère avec l'épaulement 35A, tandis que la bague 42B est éloignée de l'épaulement 35B. Le tiroir a été déplacé dans son autre positon extrême (en l'espèce vers la gauche) par alimentation en fluide de la chambre de commande 38B, dont le volume à augmenté.

Le déplacement du tiroir et l'embrayage/débrayage du moteur hydraulique sont commandés par des moyens d'électrovalve.

En l'espèce, selon le premier mode de réalisation de l'invention, ces moyens comprennent une première électrovalve de pilotage 44 dont une première voie 44A est raccordée à la première voie de commande VC 1, une deuxième voie 44B est raccordée à la pompe 24, et une troisième voie 44C est raccordée au réservoir R. Dans sa position de repos représentée sur la figure 1A, les voies 44A et 44C sont reliées, de sorte que la première chambre de commande 38A est raccordée au réservoir R, tandis que la voie 44B est isolée.

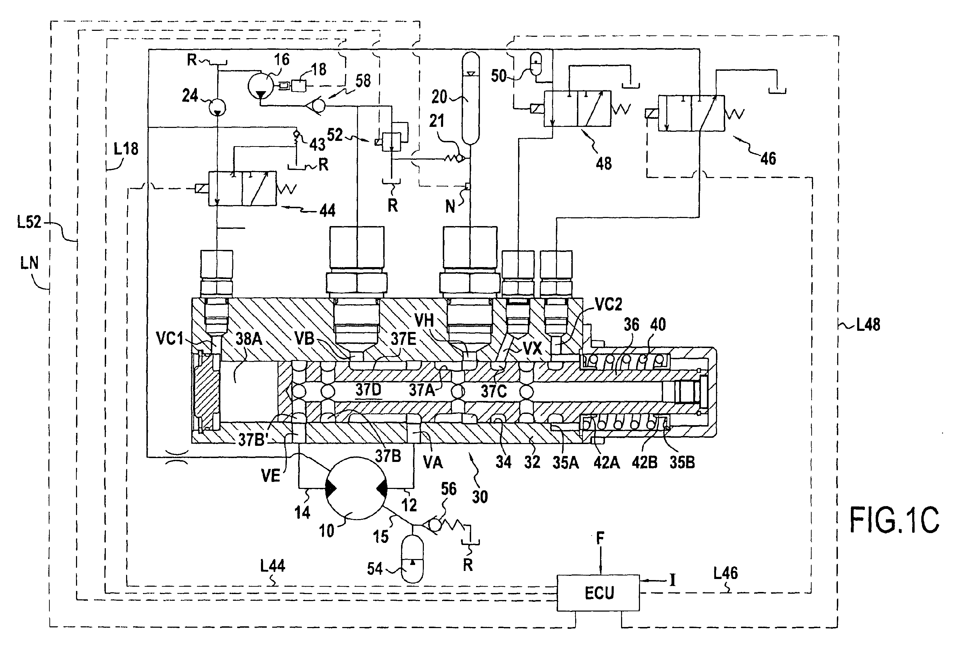

A réception d'un premier signal de commande transmis dans une ligne L44 par une unité de commande électronique ECU, l'électrovalve 44 passe dans sa position activée, dans laquelle les voies 44B et 44A sont reliées tandis que la voie 44C est isolée, de sorte que la chambre de commande 38 est alimentée par le fluide sous pression provenant de la pompe 24. Ainsi, le tiroir passe dans sa première position extrême représentée sur la figure 1C.

Les moyens d'électrovalve comprennent encore une deuxième électrovalve de pilotage 46 qui présente une première voie 46A reliée à la deuxième voie de commande VC2, une deuxième voie 46B reliée à la pompe 24 et une troisième voie 46C reliée au réservoir R.

Dans la position de repos de l'électrovalve 46 représentée sur la figure 1A, les voies 46A et 46C sont reliées, de sorte que la deuxième chambre de commande 38B est reliée au réservoir R. A réception d'un deuxième signal de commande émis dans une ligne de commande L46 par l'unité ECU, la valve 46 adopte sa position activée dans laquelle les voies 46A et 46B sont reliées, de sorte que la chambre 38B peut être alimentée en fluide par la pompe 24.

Le circuit comprend encore une électrovalve de débrayage 48 qui présente une première voie 48A qui est reliée à la voie auxiliaire VX de la valve 30, une deuxième voie 48B qui est reliée à la pompe 24 et une troisième voie 48C qui est reliée au réservoir R. Dans la position de débrayage de la valve 48 qui, en l'espèce est sa position de repos, les voies 48A et 48C sont reliées en étant isolées de la voie 48B, de sorte que la voie auxiliaire VX de la valve 38 est reliée au réservoir. Dans la position d'embrayage de l'électrovalve 48 qui, en l'espèce, est sa position activée dans laquelle elle est commandée par un signal de commande émis par l'unité ECU dans la ligne de commande L48, ses voies 48A et 48B sont reliées, de sorte que la voie auxiliaire VX de la valve 30 est reliée à la pompe 24.

Avantageusement, pour réduire le temps d'embrayage du moteur, un accumulateur 50 de faible capacité (donc peu encombrant) est disposé en dérivation sur le raccord entre la pompe 24 et les voies 44B, 46B et 48B de ces valves.

On comprend que, dans le circuit représenté, la pompe 24 sert à la fois à la commande du déplacement du tiroir 36 et à celle de l'embrayage/débrayage du moteur 10. On pourrait éventuellement prévoir deux sources de pression différentes pour, d'une part, le pilotage du tiroir et, d'autre part l'embrayage/débrayage du moteur. La solution représentée présente toutefois l'intérêt d'être plus compacte.

L'enceinte sans surpression à laquelle sont reliées les différentes voies de délestage 44C, 46C et 48C des électrovalves 44, 46 et 48 est en l'espèce le réservoir R.

Les éventuels excès de pression dans l'accumulateur 20 peuvent être délestés dans le réservoir R, auquel cet accumulateur est relié par un limiteur de pression 21.

Comme indiqué précédemment, la pompe haut débit 16 est équipée d'un embrayage électromagnétique 18 qui permet de n'activer cette pompe que lorsque cela est nécessaire, en particulier en phase de récupération d'énergie. L'embrayage 18 est commandé par un signal de commande émis par l'unité ECU dans la ligne de commande L18. La pompe 16 ne fonctionne donc pas inutilement, ce qui permet d'économiser l'énergie.

Dans le même esprit, le circuit comprend avantageusement un limiteur de pression réglable 52, pour faire varier la pression dans la voie de liaison basse pression VB. On remarque en effet qu'un limiteur de pression 52 est disposé sur une liaison entre l'orifice de refoulement de la pompe 16 et le réservoir R. Ce limiteur de pression est de type réglable et ce réglage est en l'espèce réalisé par une commande électrique, le limiteur 52 étant de type électrovalve et étant relié à l'unité de commande ECU par une ligne de commande L52. En effet, dans la phase de récupération d'énergie, la voie de liaison basse pression VB sert à l'alimentation du moteur 10 et il est alors souhaitable de régler la pression en sortie de la pompe 16 à un niveau nécessaire pour alimenter le moteur sans cavitation. En revanche, dans la phase de restitution d'énergie, la voie de liaison VB, qui est reliée à l'échappement du moteur, doit évacuer le fluide vers le réservoir sans surpression et il est alors préférable que le limiteur de pression 52 soit réglé à un niveau de pression minimum, voire de pression nulle. De préférence, dans cette phase de restitution la pompe 16 est désactivée et un clapet anti-retour 58 empêche le fluide refoulé par le moteur 10 de retourner vers la pompe 16.

On relève encore que l'espace intérieur du carter du moteur 10 est relié à un accumulateur secondaire 54. Il s'agit d'un accumulateur de faible capacité qui permet de conserver en attente une pression de fluide suffisante pour rapidement débrayer le moteur 10 lorsque cela est nécessaire. En l'espèce, l'accumulateur 54 est relié à un conduit de retour de fuites 15 du moteur. Il se recharge donc naturellement en fluide grâce aux fuites provenant du moteur. Pour permettre toutefois un échappement de ces fuites vers le réservoir R lorsque l'accumulateur 54 est rechargé, un limiteur de pression 56 est disposé sur le conduit de retour de fuite 15, en aval du point de raccordement de l'accumulateur 54 à ce conduit 15.

On voit que, de manière classique, un limiteur de pression 43 est relié au refoulement de la pompe 24. Il permet de définir la pression d'embrayage et de pilotage.

Le fonctionnement de ce circuit est le suivant.

Dans une configuration d'attente du circuit, représentée sur la figure 1A, le tiroir 36 de la valve 30 est dans sa position neutre. Dans cette situation, aucun signal de commande n'a été émis vers les valves 44 et 46 qui sont dans leur position de repos respective, de sorte que les chambres de commande 38A et 38B ne sont pas mises en pression et que la position neutre est obtenue par l'effet de rappel du ressort 40.

Dans cette position, on voit que les voies d'alimentation VA, d'échappement VE et auxiliaire VX communiquent entre elles. En effet, le tiroir 36 présente trois gorges 37A, 37B et 37C qui sont reliées entre elles par un perçage axial 37D du tiroir obturé à ses deux extrémités, et ses gorges sont respectivement en regard avec les voies VA, VE et VX. Une quatrième gorge 37E du tiroir, qui est isolée des précédentes, est alors en regard de la voie VB, qu'elle isole des autres voies.

L'unité de commande électronique ECU est informée des conditions de marche du véhicule, en particulier d'une décélération ou d'une accélération de ce dernier, et donc d'un besoin de récupération ou de restitution d'énergie par une information I. Lorsque cette information révèle une décélération propre à permettre la récupération d'énergie, l'unité ECU émet un signal d'embrayage dans la ligne L48 et commande donc l'électrovalve 48 dans sa position activée, permettant ainsi l'alimentation en fluide de la voie auxiliaire VX. Les conduits principaux d'alimentation et d'échappement 12 et 14 du moteur sont alors mis à la même pression (de sorte que le moteur ne produit encore aucun couple significatif) mais cette pression délivrée par la pompe 24 et éventuellement l'accumulateur 50, est suffisamment supérieure à la pression régnant dans le carter du moteur pour repousser les pistons de ce moteur contre la came de ce dernier. Le moteur est alors embrayé. Il convient de relever que ce qui vient d'être décrit se réfère au cas où la position de repos de l'électrovalve est celle dans laquelle elle relie la voie VX au réservoir R. Un montage inverse peut être envisagé, selon lequel le débrayage serait obtenu au contraire en position activée de l'électrovalve et donc par l'émission d'un signal de débrayage dans la ligne 48, alors que l'embrayage sera obtenu en faisant cesser ce signal pour faire revenir l'électrovalve 48 dans sa position de débrayage (qui serait alors sa position de repos), reliant la voie VX à la pompe 24. Dans la présentation générale de l'invention, on évoque donc un signal de sélection qui, pour faire passer l'électrovalve dans sa configuration d'embrayage peut être un signal de commande positif ou au contraire la cessation du signal de commande ayant précédemment maintenu l'électrovalve dans sa position d'embrayage.

La figure 1B montre la situation lors de l'embrayage du moteur. On voit que le tiroir est resté dans sa position neutre, sans modifier le raccordement entre les voies VA, VE et VX ni l'isolement de la voie VB, mais que l'électrovalve 48 est dans sa position d'embrayage.

Pour permettre la phase de récupération d'énergie consistant à alimenter l'accumulateur 20 par la rotation du moteur 10 fonctionnant en pompe, il est nécessaire que la pompe 16 soit alors activée par son embrayage 18, en particulier par un signal de commande d'embrayage émis par l'unité de commande électronique ECU.

Le moteur étant embrayé et la pompe étant activée, l'unité de commande électronique ECU émet un premier signal de commande dans la ligne L44 pour faire passer l'électrovalve 44 en position activée, de manière à commander le déplacement du tiroir dans sa première position extrême par alimentation de la chambre de commande 38A.

C'est la situation que représente la figure 1C. On voit que les voies VA et VB de la valve 30 sont alors reliées par la gorge 37E du tiroir 36 en étant isolées des autres voies. La voie VE est quant à elle reliée à la voie VH par la gorge 37B' du tiroir, son perçage central 37D et la gorge 37A. Fonctionnellement, la gorge 37B' est analogue à la gorge 37B et l'on comprend que ces deux gorges voisines pourraient être remplacées par une seule gorge du type de la gorge 37A. La voie VX est quant à elle isolée des autres voies.

Le limiteur de pression réglage 52 est alors réglé à son niveau maximal de pression. Par exemple, ce niveau est celui obtenu par l'émission d'un signal de commande du limiteur de pression 52 dans la ligne L52, par l'unité ECU. Dans cette situation, le moteur 10 est entraîné en rotation par sa liaison mécanique avec la propulsion du véhicule, et il fonctionne comme une pompe en alimentant l'accumulateur haute pression 20 par le fluide provenant de la pompe 16.

Cette phase de récupération d'énergie peut se prolonger pendant toute la durée de la décélération ou, si l'unité ECU constate qu'il n'est plus nécessaire de continuer à alimenter l'accumulateur 20, elle peut éventuellement se terminer avant la fin de la décélération. Pour constater qu'il n'est plus nécessaire de continuer à remplir l'accumulateur 20, l'unité ECU peut par exemple recevoir un signal de niveau de pression à la voie VH, ce signal étant émis dans une ligne LN par un capteur de pression N lié à l'accumulateur 20. D'autres types d'informations peuvent signaler la fin de la phase de récupération d'énergie, telles que par exemple une ouverture du limiteur de pression 21.

En tout état de cause, lorsque la phase de récupération d'énergie est terminée, le signal de commande dans la ligne L44 cesse, de sorte que l'électrovalve 44 revient à sa position de repos, reliant ainsi la première chambre 38A au réservoir R. Le tiroir 36 revient alors dans sa position neutre et l'on obtient la configuration de la figure 1D, analogue à celle de la figure 1B à ceci près que le niveau de fluide dans l'accumulateur 20 a augmenté.

La configuration de la figure 1D correspond à une phase d'équilibrage, dans laquelle les conduits principaux 12 et 14 du moteur communiquent entre eux. Il est avantageux que, au moins pendant une première période de cette phase d'équilibrage, le moteur reste embrayé, de manière à passer très rapidement en phase de restitution d'énergie si nécessaire ou à reprendre une phase de récupération d'énergie si le freinage reprend. C'est pourquoi, sur la figure 1D, l'électrovalve 48 reste dans sa position d'embrayage. On prévoit toutefois avantageusement que le moteur puisse être débrayé si, à l'issue de cette première période, il n'est pas encore nécessaire de passer à la phase de restitution d'énergie. Pour cela, il suffit que le signal d'embrayage cesse, permettant ainsi le passage de l'électrovalve 48 dans sa configuration correspondant au débrayage, dans laquelle la voie auxiliaire VX est reliée au réservoir R.

La fin de la première période peut être constatée en fonction de différents paramètres, comme indiqué dans la partie introductive. A cet effet, l'unité ECU peut par exemple recevoir une information F de fin de la première période. Il peut s'agir de la durée de ladite première période, qu'un calculateur de l'unité ECU compare à une durée pré-enregistrée dans une mémoire. Il peut également s'agir du niveau de pression dans l'accumulateur, comparé à un niveau de référence mémorisée dans l'unité ECU, ou encore d'une comparaison entre la durée de la première période et celle de la phase de récupération de l'énergie, laquelle est fournie à l'unité ECU par une information supplémentaire.

Si la fin de la première période est constatée, la phase d'équilibrage comprend une deuxième période pendant laquelle le moteur est débrayé par le retour de l'électrovalve 48 dans sa position de débrayage. Dans ce cas, ce n'est que lorsque l'information I transmise à l'unité ECU révèle la nécessite de commencer une phase de restitution d'énergie, que le moteur est embrayé à nouveau par l'émission, par l'unité ECU, du signal de sélection commandant le passage de l'électrovalve 48 dans sa position d'embrayage.

Lorsque le moteur est embrayé, pour passer à la phase de restitution d'énergie, il suffit d'émettre un deuxième signal de commande dans la ligne L46 pour passer dans la phase de restitution d'énergie. Le circuit est alors dans la configuration représentée sur la figure 1E, sur laquelle on voit que l'électrovalve 46 est dans sa position activée, permettant ainsi l'alimentation en fluide de la chambre de commande 38B, ce qui déplace le tiroir 36 dans sa deuxième position extrême.

Dans cette position du tiroir, la voie d'alimentation VA et la voie haute pression VH de la valve 30 sont reliées par la gorge 37A, le perçage 37D et la gorge 37C du tiroir 36, en étant isolées des autres voies. La voie d'échappement VE et la voie basse pression VB sont reliées par la gorge 37E du tiroir en étant isolés des autres gorges, et la voie auxiliaire VX est isolée des autres gorges. Durant cette phase de restitution d'énergie, le moteur 10, alimenté par la haute pression provenant de l'accumulateur 20 participe à la motricité du véhicule. Ceci permet en particulier de réaliser des économies d'énergie lors d'un redémarrage du moteur après un arrêt ou lors d'une accélération à basse vitesse. La fin de la phase de restitution d'énergie est constatée par l'unité ECU, par exemple lorsque l'information I qui est transmise à cette dernière révèle que le véhicule a atteint une vitesse suffisante ou que l'accélération cesse. Elle est par ailleurs arrêtée lorsque l'accumulateur 20 ne dispose plus d'une pression de fluide suffisante, en particulier lorsque le capteur N révèle un niveau de pression bas dans cet accumulateur.

Durant cette phase d'accélération, le limiteur de pression 52 est réglé à pression minimale, voire nulle, ce réglage étant par exemple obtenu lorsque le signal dans la ligne L52 cesse. Il convient d'ailleurs de relever que le limiteur de pression 52 est avantageusement réglé sur le niveau de pression minimal dès le début de la phase d'équilibrage ou, au moins, dès la fin de la première période de cette phase. Durant la phase d'accélération, la pompe 16 est désactivée, par une commande appropriée ou une absence de signal de commande dans la ligne de commande L18.

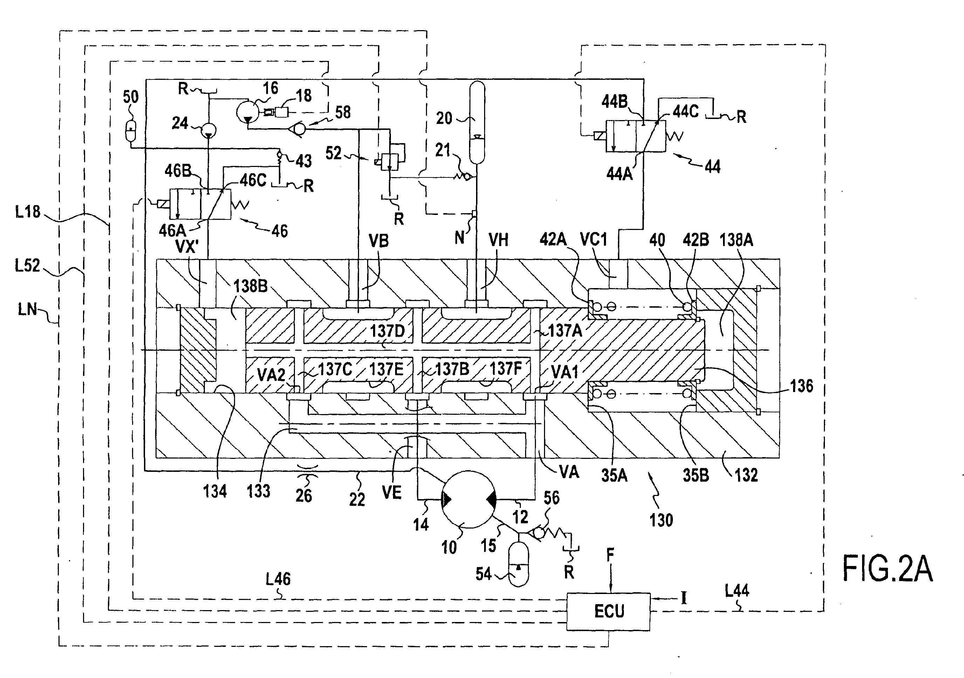

On décrit maintenant les figures 2A à 2D, sur lesquelles les éléments inchangés par rapport aux figures 1A à 1E sont désignés par les mêmes références aux dessins.

Dans la valve 30, la deuxième voie de commande VC2 et la voie auxiliaire VX étaient distinctes, tandis que, dans la valve 130, une même voie VX' est à la fois la voie auxiliaire et la deuxième voie de commande qui alimente la chambre de commande 138B, bien qu'il pourrait s'agir de celle qui alimente la chambre 138A. Grâce à un perçage 133 du corps 132 de la valve 130, sa voie VA débouche dans son alésage 134 en deux emplacements distincts, respectivement VA1 et VA2, espacés l'un de l'autre dans la direction de déplacement du tiroir. Ce dernier présente trois perçages transversaux 137A, 137B et 137C, reliés entre eux par un perçage borgne 137D qui s'ouvre dans la chambre 138B. Ce perçage s'ouvre dans la chambre à laquelle est reliée la voie auxiliaire VX' et, si cette voie était reliée à la chambre 138A, ce perçage serait fermé du côté de la chambre 138B mais ouvert du côté de la chambre 138A.

Les premières voies 44A et 46A des valves 44 et 46 sont respectivement reliées aux chambres de commande 138A et 138B qui, sur le dessin, sont respectivement situées aux extrémités droite et gauche de l'alésage 134 du corps 132 de la valve 130.

Sur la figure 2A, le tiroir est dans sa position neutre et l'on voit que les voies VA et VE communiquent entre elles et avec la voie VX', par les perçages 137A à 137D du tiroir. Dans la mesure où l'électrovalve 46 est alors dans sa position neutre, dans laquelle elle relie la voie VX' au réservoir R, les conduits principaux 12 et 14 du moteur 10 sont alors reliés au réservoir, de sorte que le moteur est débrayé.

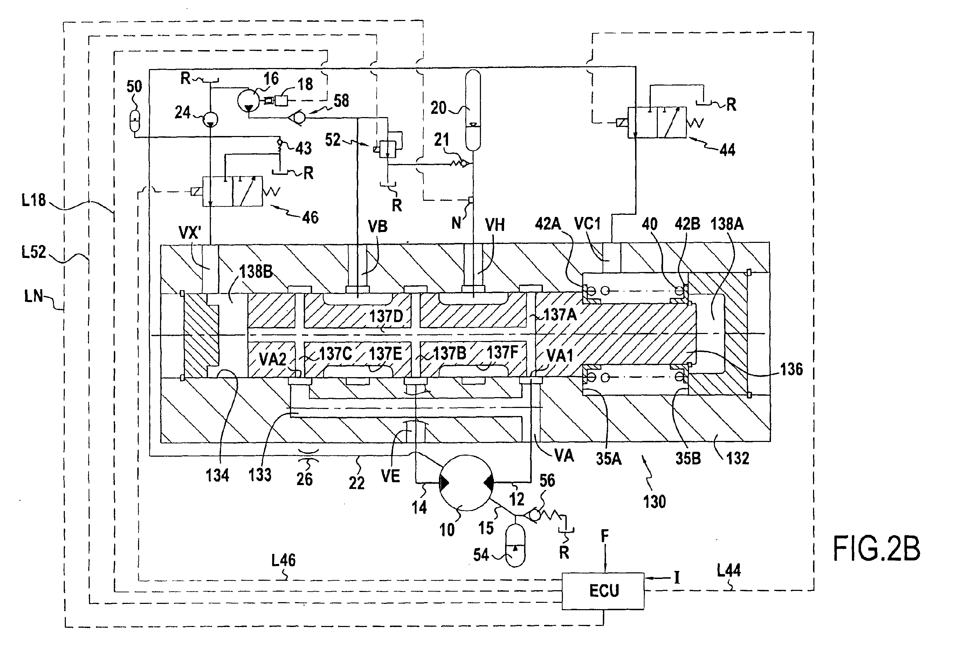

Le signal de sélection permettant d'embrayer le moteur 10 consiste dans les premiers signaux de commande, respectivement émis dans les lignes L44 et L46 par l'unité ECU pour commander les deux électrovalves 44 et 46 dans leurs positions activées. Dans cette situation, les deux chambres de commande 138A et 138B sont toutes deux reliées à la sortie de la pompe 24, de sorte que la pression dans ces deux chambres est la même et que le tiroir reste dans sa position neutre, dans laquelle il est constamment rappelé par le ressort 40. Toutefois, dans la mesure où, dans cette situation, la voie auxiliaire VX' qui sert à la fois de voie de commande pour alimenter la chambre 138B est reliée à la sortie de la pompe 24, la pression commune dans les conduits 12 et 14 du moteur augmente, ce qui permet d'embrayer ce moteur. C'est la situation que montre la figure 2B.

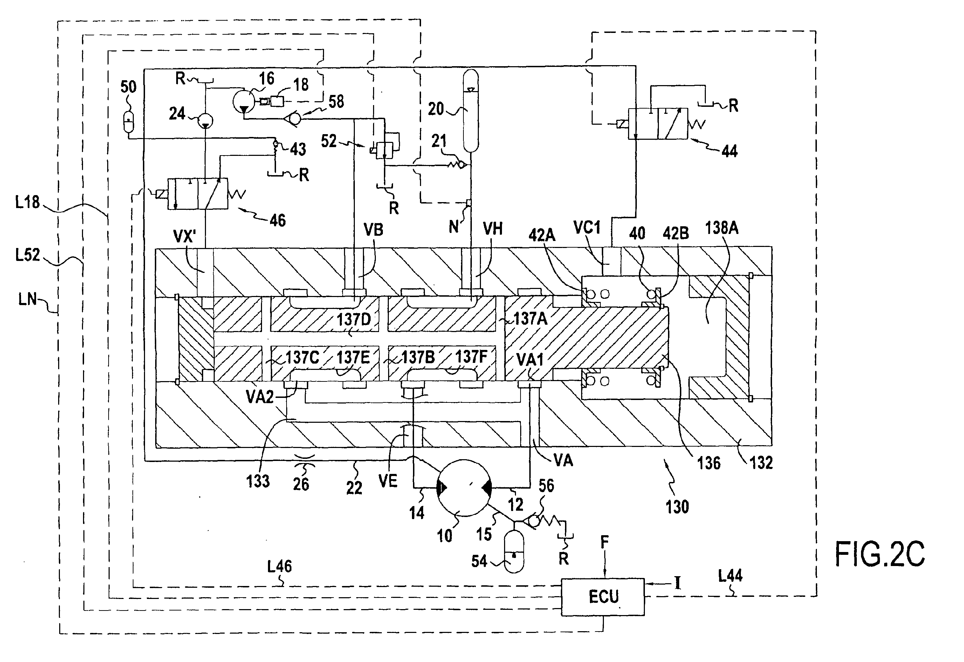

Pour passer de cette situation à la situation de récupération d'énergie, on continue d'émettre dans la ligne de commande L44 le premier signal de commande, pour continuer d'alimenter en fluide la première chambre de commande 138A, mais on cesse le signal de commande dans la ligne L46 de telle sorte que la valve 46 retourne dans sa position de repos, dans laquelle elle relie la voie VX' et donc la deuxième chambre de commande 138B au réservoir R. Dans cette situation, le tiroir est commandé dans sa première position extrême (en l'espèce, vers la gauche). Dans ce cas, la voie d'alimentation VA est reliée à la voie basse pression VB, par la gorge 137E du tiroir 136 qui est en regard avec, à la fois, l'orifice VA2 de la voie VA et la voie VB. Ces voies VA et VB sont isolées des autres voies. La voie VE est reliée à la voie VH par la gorge 137F du tiroir. Les perçages 137A, 137B et 137C du tiroir sont obturés par la paroi de l'alésage 134, de sorte que la voie VX' est isolée des autres voies. C'est la situation que montre la figure 2C. A la fin de la phase de récupération d'énergie, on réalise une phase d'équilibrage.

Pour réaliser la première période de cette phase d'équilibrage, dans laquelle moteur reste embrayé, l'unité ECU émet à nouveau un signal de commande dans la ligne L46, ce qui active l'électrovalve 46 et alimente donc également la chambre 138B à partir de la pompe 24, mettant ainsi cette chambre à la même pression que la chambre 138A, ce qui fait revenir le tiroir 136 à sa position neutre intermédiaire, tout en conservant le moteur à l'état embrayé. La situation est alors la même que celle de la figure 2B, à ceci près que le niveau de fluide dans l'accumulateur 20 a augmenté. Pour réaliser la deuxième période de cette phase d'équilibrage, l'unité ECU cesse d'émettre les signaux de commande dans les lignes L44 et L46, de sorte que les valves 44 et 46 reviennent à leurs positions neutres, revenant ainsi à la configuration de la figure 2A, dans laquelle les conduits d'alimentation et d'échappement 12 et 14 sont reliés au réservoir, ce qui provoque le débrayage du moteur.

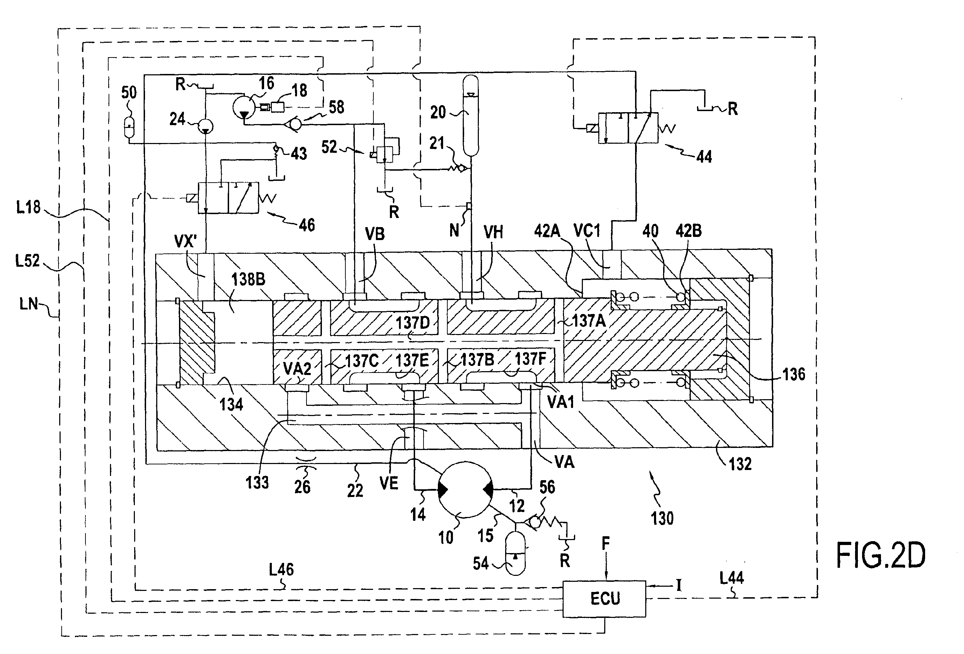

A l'issue de la phase d'équilibrage, on réalise la phase de restitution d'énergie en mettant le circuit dans la configuration représentée à la figure 2D. Si on réalise la phase de restitution d'énergie avant la fin de la première période de la phase d'équilibrage, on parvient dans la configuration de la figure 2D en continuant d'émettre le signal de commande dans la ligne L46 pour maintenir la valve 46 dans sa position active, et on cesse d'émettre le signal de commande dans la ligne L44 pour amener la valve 44 dans sa position de repos. Si on réalise la phase de restitution d'énergie après la fin de cette première période, c'est-à-dire alors que les valves 44 et 46 sont toutes deux en position de repos, on obtient la configuration de la figure 2D en émettant un signal de commande dans la ligne L46 pour placer la valve 46 en position activée.

Ainsi, dans la configuration de la figure 2D, seule la chambre de commande 138B est alimentée en fluide, par la voie VX', de sorte que le tiroir est déplacé dans sa deuxième position extrême (en l'espèce, vers la droite).

Dans cette position du tiroir, la voie VA communique avec la voie VH par la gorge 137F du tiroir, qui est en regard avec, à la fois, la voie VH et le premier orifice VA1 de la voie VA. Le deuxième orifice de cette voie est quant à lui obturé par le tiroir. La voie VE communique avec la voie VB par la gorge 137E qui est en regard de ces deux voies, tandis que la voie VX' est isolée des autres voies puisque les perçages 137A, 137B et 137C du tiroir sont obturés par la paroi de l'alésage 134 du corps 132.

Avec le circuit des figures 2A à 2D, on peut donc obtenir les mêmes configurations qu'avec celui des figures 1A à 1E en omettant l'électrovalve 48, puisque la commande de l'embrayage ou du débrayage du moteur est réalisée à partir de l'électrovalve 46.

L'unité de commande électronique ECU est apte à recevoir les informations de différents capteurs. Notamment, l'information I qui lui permet de déclencher les phases de récupération ou de restitution d'énergie peut être basée sur les mesures de différents capteurs, se rapportant en particulier à des niveaux de freinage ou d'accélération du véhicule, de couple moteur délivré par la propulsion principale, à partir desquels, sur la base de calculs et de comparaisons avec des données enregistrées, l'unité ECU détermine la nécessité de déclencher ces phases. Des données relatives à l'état de charge de l'accumulateur 20 sont avantageusement également prises en compte dans cette détermination, pour éviter en particulier de déclencher une phase de récupération d'énergie lorsque la charge est maximale. L'unité ECU comporte toute zone mémoire et tout moyen de calcul ou de comparaison appropriés pour remplir ses fonctions. Les liaisons de l'unité ECU avec les différents capteurs dont elle reçoit les données et les différents organes qu'elle commande peuvent être filaires ou non.

## Revendications

1. Circuit hydraulique de récupération d'énergie, comprenant au moins un moteur hydraulique (10), deux conduits principaux (12, 14) pour l'alimentation en fluide ou l'échappement dudit au moins un moteur, une source de fluide à basse pression (16), un accumulateur haute pression (20) formant une source de fluide à haute pression, et des moyens de valve aptes à adopter une configuration de récupération d'énergie dans laquelle lesdits moyens de valve (30 ; 130) relient respectivement le conduit principal d'alimentation (12) à la source de fluide à basse pression (16) et le conduit principal d'échappement (14) à l'accumulateur haute pression (20), et une configuration de restitution d'énergie dans laquelle lesdits moyens de valve (30 ; 130) relient respectivement le conduit principal d'alimentation (12) à l'accumulateur haute pression (20) et le conduit principal d'échappement (14) à la source de fluide à basse pression (16),
**caractérisé en ce que** le moteur hydraulique (10) est apte à être débrayé ou à être embrayé par pression de fluide, **en ce que** les moyens de valve comprennent une valve hydraulique (30 ; 130) comprenant un corps de valve (32 ; 132) ayant une voie d'alimentation (VA) reliée au conduit principal d'alimentation (12), une voie d'échappement (VE) reliée au conduit principal d'échappement (14), une voie de liaison basse pression (VB) reliée à la source de fluide à basse pression (16), une voie de liaison haute pression (VH) reliée à l'accumulateur haute pression (20) et une voie auxiliaire (VX ; VX'), ainsi qu'un tiroir (36 ; 136) apte à occuper dans le corps une position neutre dans laquelle les voies d'alimentation (VA) et d'échappement (VE) communiquent entre elles et avec la voie auxiliaire (VX ; VX'), une position de récupération d'énergie dans laquelle la voie d'alimentation (VA) est reliée à la voie de liaison basse pression (VB) tandis que la voie d'échappement (VE) est reliée à la voie de liaison haute pression (VH), et une position de restitution d'énergie dans laquelle la voie d'alimentation (VA) est reliée à la voie de liaison haute pression (VH) tandis que la voie d'échappement (VE) est reliée à la voie de liaison basse pression (VB), et **en ce qu'**il comprend des moyens de commande et de sélection (44, 46, 48 ; 44, 46) aptes à provoquer un déplacement du tiroir (36 ; 136) de sa position neutre vers sa position de récupération d'énergie à réception d'un premier signal de commande (L44), à provoquer un déplacement du tiroir (36 ; 136) de sa position neutre vers sa position de restitution d'énergie à réception d'un deuxième signal de commande (L46), et à provoquer le raccordement de la voie auxiliaire (VX ; VX') avec une enceinte sans surpression (R) ou avec une source de fluide d'embrayage (24, 50) du moteur hydraulique (10) à réception d'un signal de sélection (L48 ; L46).

2. Circuit selon la revendication 1, **caractérisé en ce que** la position neutre du tiroir (36 ; 136) est intermédiaire entre les positions de récupération d'énergie et de restitution d'énergie.

3. Circuit selon la revendication 1 ou 2, **caractérisé en ce qu'**il comprend au moins un rappel élastique (40) apte à rappeler en permanence le tiroir (36 ; 136) vers sa position neutre.

4. Circuit selon l'une quelconque des revendications 1 à 3, **caractérisé en ce que** la valve hydraulique (30 ; 130) présente une première chambre de commande (38A ; 138A) apte à être alimentée en fluide par une première voie de commande (VC1) pour solliciter un déplacement du tiroir (36 ; 136) vers sa position de récupération d'énergie et une deuxième chambre de commande (38B ; 138B) apte à être alimentée en fluide par une deuxième voie de commande (VC2 ; VX') pour solliciter un déplacement du tiroir (36 ; 136) vers sa position de restitution d'énergie, et **en ce que** le circuit comprend des moyens d'électrovalve (44, 46) aptes à relier les deux voies de commande (VC1, VC2 ; VC1, VX'2) à une enceinte sans surpression (R) en l'absence de signal de commande (L44, L46), à relier la première voie de commande (VC1) à une source de fluide de pilotage (24) à réception du premier signal de commande (L44) et à relier la deuxième voie de commande (VC2 ; VX')) à la source de fluide de pilotage (24) à réception du deuxième signal de commande (L46).

5. Circuit selon la revendication 4, **caractérisé en ce que** les moyens d'électrovalve comprennent une première électrovalve de pilotage (44) apte, en position de repos, à raccorder la première voie de commande (VC1) à l'enceinte sans surpression (R) et, en position activée, à raccorder cette première voie (VC1) à la source de fluide de pilotage (24), ainsi qu'une deuxième électrovalve de pilotage (46) apte, en position de repos, à raccorder la deuxième voie de commande (VC2 ; VX') à l'enceinte sans surpression (R) et, en position activée, à raccorder cette deuxième voie (VC2 ; VX') à la source de fluide de pilotage (24).

6. Circuit selon la revendication 5, **caractérisé en ce que** la voie auxiliaire (VX') est l'une des voies de commande.

7. Circuit selon la revendication 6, **caractérisé en ce que** les moyens d'électrovalve sont aptes à relier les deux voies de commande (VX' ; VC1) à la source de fluide de pilotage (24) à réception conjointe des premier et deuxième signaux de commande (L44, L46) émis ensemble.

8. Circuit selon la revendication 5, **caractérisé en ce qu'**il comprend une électrovalve de débrayage (48) apte à adopter une position de débrayage dans laquelle elle raccorde la voie auxiliaire (VX) à une enceinte sans surpression (R) et une position d'embrayage dans laquelle elle raccorde la voie auxiliaire (VX) à la source de fluide d'embrayage (24, 50).

9. Circuit selon l'une quelconque des revendications 1 à 8, **caractérisé en ce que** l'espace intérieur du carter du ou des moteurs hydrauliques (10) est mis en pression.

10. Circuit selon la revendication 9, **caractérisé en ce que** l'espace intérieur du carter du moteur (10) est relié à la source de fluide d'embrayage (24) par l'intermédiaire d'une restriction (26).

11. Circuit selon la revendication 9 ou 10, **caractérisé en ce que** l'espace intérieur du carter du moteur (10) est relié à un accumulateur secondaire (54).

12. Circuit selon l'une quelconque des revendications 1 à 11, **caractérisé en ce que** la source de fluide à basse pression comprend une pompe de gavage haut débit (16) apte à délivrer un débit de fluide suffisant pour assurer l'alimentation en fluide dudit au moins un moteur hydraulique (10) alors que celui-ci est à vitesse maximale dans la configuration de récupération d'énergie et **en ce qu'**il comprend des moyens (18) pour activer ou désactiver la pompe de gavage haut débit (16).

13. Circuit selon la revendication 12, **caractérisé en ce que** la pompe de gavage haut débit (16) est équipée d'un embrayage électromagnétique (48).

14. Circuit selon la revendication 13, **caractérisé en ce qu'**il comprend un limiteur de pression réglable (52), pour faire varier la pression dans la voie de liaison basse pression (VB).

15. Procédé de commande d'un circuit selon l'une quelconque des revendications 1 à 14 équipant un véhicule ayant un dispositif de propulsion auquel ledit au moins un moteur hydraulique (10) est apte à être mécaniquement lié, **caractérisé en ce qu'**il comprend au moins les étapes de commande suivantes :
- on émet le premier signal de commande (L44) pour réaliser, lors d'une décélération du véhicule entraîné par le dispositif de propulsion, une phase de récupération d'énergie pendant laquelle ledit au moins un moteur hydraulique (10) est embrayé,
- on cesse l'émission du premier signal de commande (L44) pour réaliser une phase d'équilibrage dans laquelle les conduits principaux d'alimentation et d'échappement (12, 14) communiquent,
- on émet le deuxième signal de commande (L46) pour réaliser, lors d'une accélération du véhicule entraîné conjointement par le dispositif de propulsion et ledit au moins un moteur hydraulique (10), une phase de restitution d'énergie dans laquelle le moteur hydraulique (10) est embrayé,
- on cesse l'émission du deuxième signal de commande (L46) pour réaliser une phase d'attente dans laquelle les conduits principaux d'alimentation et d'échappement (12, 14) communiquent et dans laquelle ledit au moins un moteur hydraulique (10) est débrayé.

16. Procédé selon la revendication 15, **caractérisé en ce que** la phase d'équilibrage comprend une première période pendant laquelle ledit au moins un moteur hydraulique (10) reste embrayé et **en ce que**, si la fin de cette première période est constatée, cette première période est suivie par une deuxième période pendant laquelle ledit au moins un moteur hydraulique (10) est débrayé et à la fin de laquelle ledit au moins un moteur hydraulique est embrayé à nouveau.

17. Procédé selon la revendication 15 ou 16 dans lequel, pour embrayer ledit au moins un moteur hydraulique (10), on raccorde la voie auxiliaire (VX, VX') de la valve hydraulique (30 ; 130) avec la source de fluide d'embrayage (24, 50), **caractérisé en ce qu'**on maintient le raccordement entre la voie auxiliaire (VX, VX') et la source de fluide d'embrayage pendant l'une au moins des phases de récupération et de restitution d'énergie.

## Claims

1. A hydraulic circuit for recovering energy, which circuit comprises at least one hydraulic motor (10), two main ducts (12, 14) for feeding fluid to or discharging fluid from said at least one motor, a low-pressure fluid source (16), a high-pressure accumulator (20) forming a high-pressure fluid source, and valve means suitable for taking up an energy recovery configuration in which said valve means (30; 130) respectively connect the feed main duct (12) to the low-pressure fluid source (16) and connect the discharge main duct (14) to the high-pressure accumulator (20), and an energy delivery configuration in which said valve means (30; 130) respectively connect the feed main duct (12) to the high-pressure accumulator (20) and connect the discharge main duct (14) to the low-pressure fluid source (16);
said hydraulic circuit being **characterized in that** the hydraulic motor (10) is suitable for being declutched or for being clutched by fluid pressure, **in that** the valve means comprise a hydraulic valve (30; 130) comprising firstly a valve body (32; 132) having a feed port (VA) connected to the feed main duct (12), a discharge port (VE) connected to the discharge main duct (14), a low-pressure link port (VB) connected to the low-pressure fluid source (16), a high-pressure link port (VH) connected to the high-pressure accumulator (20), and an auxiliary port (VX; VX'), and secondly a slide (36; 136) suitable for taking up, inside the body, a neutral position in which the feed port (VA) and the discharge port (VE) communicate with each other and with the auxiliary port (VX; VX'), an energy recovery position in which the feed port (VA) is connected to the low-pressure link port (VB) while the discharge port (VE) is connected to the high-pressure link port (VH), and an energy delivery position in which the feed port (VA) is connected to the high-pressure link port (VH) while the discharge port (VE) is connected to the low-pressure link port (VB), and **in that** the hydraulic circuit further comprises control and selection means (44, 46, 48; 44, 46) suitable for causing the slide (36; 136) to move from its neutral position towards its energy recovery position on receiving a first control signal (L44), for causing the slide (36; 136) to move from its neutral position towards its energy delivery position on receiving a second control signal (L46), and for causing the auxiliary port (VX; VX') to be connected to a pressure-free enclosure (R) or to a clutch fluid source (24, 50) for clutching the hydraulic motor (10) on receiving a selection signal (L48; L46).

2. A circuit according to claim 1, **characterized in that** the neutral position of the slide (36; 136) is intermediate between the energy recovery position and the energy delivery position.

3. A circuit according to claim 1 or claim 2, **characterized in that** it comprises at least one resilient return member (40) suitable for urging the slide (36; 136) continuously back towards its neutral position.

4. A circuit according to any one of claims 1 to 3, **characterized in that** the hydraulic valve (30; 130) has a first control chamber (38A; 138A) suitable for being fed with fluid via a first control port (VC1) so as to urge the slide (36; 136) to move towards its energy recovery position, and a second control chamber (38B; 138B) suitable for being fed with fluid via a second control port (VC2; VX') so as to urge the slide (36; 136) to move towards its energy delivery position, and **in that** the circuit comprises solenoid valve means (44, 46) suitable for connecting the two control ports (VC1, VC2; VC1, VX'2) to a pressure-free enclosure (R) in the absence of a control signal (L44, L46), for connecting the first control port (VC1) to a pilot fluid source (24) on receiving the first control signal (L44), and for connecting the second control port (VC2; VX') to the pilot fluid source (24) on receiving the second control signal (L46).

5. A circuit according to claim 4, **characterized in that** the solenoid valve means comprise a first pilot solenoid valve (44) suitable, in the rest position, for connecting the first control port (VC1) to the pressure-free enclosure (R) and, in the activated position, for connecting said first port (VC1) to the pilot fluid source (24), and a second pilot solenoid valve (46) suitable, in the rest position, for connecting the second control port (VC2; VX') to the pressure-free enclosure (R) and, in the activated position, for connecting said second port (VC2; VX') to the pilot fluid source (24).

6. A circuit according to claim 5, **characterized in that** the auxiliary port (VX') is one of the control ports.

7. A circuit according to claim 6, **characterized in that** the solenoid valve means are suitable for connecting both of the control ports (VX'; VC1) to the pilot fluid source (24) on jointly receiving first and second control signals (L44, L46) issued together.

8. A circuit according to claim 5, **characterized in that** it comprises a declutching solenoid valve (48) suitable for taking up a declutching position in which it connects the auxiliary port (VX) to a pressure-free enclosure (R) and a clutching position in which it connects the auxiliary port (VX) to the clutch fluid source (24, 50).

9. A circuit according to any one of claims 1 to 8, **characterized in that** the internal space(s) of the casing(s) of the hydraulic motor(s) (10) is/are put under pressure.

10. A circuit according to claim 9, **characterized in that** the internal space of the casing of the motor (10) is connected to the clutch fluid source (24) via a constriction (26).

11. A circuit according to claim 9 or claim 10, **characterized in that** the internal space of the casing of the motor (10) is connected to a secondary accumulator (54).

12. A circuit according to any one of claims 1 to 11, **characterized in that** the low-pressure fluid source comprises a high-flow-rate booster pump (16) suitable for delivering a flow-rate of fluid that is sufficient to feed fluid said at least one hydraulic motor (10) while said motor is at maximum speed in the energy recovery configuration, and **in that** said circuit comprises means (18) for activating or deactivating the high-flow-rate booster pump (16).

13. A circuit according to claim 12, **characterized in that** the high-flow-rate booster pump (16) is equipped with an electromagnetic clutch (48).

14. A circuit according to claim 13, **characterized in that** it comprises an adjustable pressure limiter (52) for causing the pressure to vary in the low-pressure link port (VB).

15. A method of controlling a circuit according to any one of claims 1 to 14, equipping a vehicle having a propulsion device to which said at least one hydraulic motor (10) is suitable for being mechanically coupled, said method being **characterized in that** it comprises at least the following control steps:
- issuing a first control signal (L44) for performing an energy recovery phase during which said at least one hydraulic motor (10) is clutched while the vehicle as driven by the propulsion device is decelerating;
- ceasing to issue the first control signal (L44) for performing a balancing phase during which the feed and discharge main ducts (12, 14) communicate with each other;
- issuing a second control signal (L46) for performing an energy delivery phase during which the hydraulic motor (10) is clutched while the vehicle as driven jointly by the propulsion device and by said at least one hydraulic motor (10) is accelerating; and
- ceasing to issue the second control signal (L46) for performing a standby phase during which the feed and discharge main ducts (12, 14) communicate with each other, and during which said at least one hydraulic motor (10) is declutched.

16. A method according to claim 15, **characterized in that** the balancing phase includes a first period during which said at least one hydraulic motor (10) remains clutched, and **in that**, if it is established that said first period has ended, said first period is followed by a second period during which said at least one hydraulic motor (10) is declutched, and at the end of which said at least one hydraulic motor is clutched again.

17. A method according to claim 15 or 16 in which, in order to clutch said at least one hydraulic motor (10), the auxiliary port (VX, VX') of the hydraulic valve (30; 130) is connected to the clutch fluid source (24, 50), **characterized in that** the connection between the auxiliary port (VX, VX') and the clutch fluid source is maintained during at least one of the energy recovery and energy delivery phases.

## Patentansprüche

1. Hydraulikkreislauf zur Energierückgewinnung, umfassend mindestens einen Hydraulikmotor (10), zwei Hauptleitungen (12, 14) für die Fluidversorgung oder den Fluidauslaß dieses mindestens einen Motors, eine Niederdruckfluidquelle (16), einen Hochdruckspeicher (20), der eine Hochdruckfluidquelle formt, und Ventilmittel, die geeignet sind, eine Energierückgewinnungskonfiguration einzunehmen, in welcher diese Ventilmittel (30; 130) jeweils die Hauptversorgungsleitung (12) mit der Niederdruckfluidquelle (16) und die Hauptauslaßleitung (14) mit dem Hochdruckspeicher (20) verbinden, und eine Energiefreisetzungskonfiguration, in welcher diese Ventilmittel (30; 130) jeweils die Hauptversorgungsleitung (12) mit dem Hochdruckspeicher (20) und die Hauptauslaßleitung (14) mit der Niederdruckfluidquelle (16) verbinden,
**dadurch gekennzeichnet, daß** der Hydraulikmotor (10) geeignet ist, durch Fluiddruck ausgekuppelt oder eingekuppelt zu werden, daß die Ventilmittel ein Hydraulikventil (30; 130) mit einem Ventilkörper (32; 132) aufweisen, umfassend einen Versorgungskanal (VA), der mit der Hauptversorgungsleitung (12) verbunden ist, einen Auslaßkanal (VE), der mit der Hauptauslaßleitung (14) verbunden ist, einen Niederdruckverbindungskanal (VB), der mit der Niederdruckfluidquelle (16) verbunden ist, einen Hochdruckverbindungskanal (VH), der mit dem Hochdruckspeicher (16) verbunden ist, und einen Hilfskanal (VX; VX') sowie einen Schieber (36; 136), der geeignet ist, im Körper eine Neutralstellung, in welcher der Versorgungskanal (VA) und der Auslaßkanal (VE) miteinander und mit dem Hilfskanal (VX; VX') verbunden sind, eine Energierückgewinnungsstellung, in welcher der Versorgungskanal (VA) mit dem Niederdruckverbindungskanal (VB) verbunden ist, während der Auslaßkanal (VE) mit dem Hochdruckverbindungskanal (VH) verbunden ist, und eine Energiefreisetzungsstellung einzunehmen, in welcher der Versorgungskanal (VA) mit dem Hochdruckverbindungskanal (VH) verbunden ist, während der Auslaßkanal (VE) mit dem Niederdruckverbindungskanal (VB) verbunden ist, und **dadurch gekennzeichnet, daß** er Steuer- und Wählmittel (44, 46, 48; 44, 46) umfaßt, die geeignet sind, bei Empfang eines ersten Steuersignals (L44) eine Bewegung des Schiebers (36; 136) aus seiner Neutralstellung in seine Energierückgewinnungsstellung zu bewirken, bei Empfang eines zweiten Steuersignals (L46) eine Bewegung des Schiebers (36; 136) aus seiner Neutralstellung in seine Energiefreisetzungsstellung zu bewirken, und bei Empfang eines Wählsignals (L48; L46) die Verbindung des Hilfskanals (VX; VX') mit einer überdrucklosen Kammer (R) oder mit einer Kupplungsfluidquelle (24; 50) des Hydraulikmotors (10) zu bewirken.

2. Hydraulikkreis nach Anspruch 1, **dadurch gekennzeichnet, daß** die Neutralstellung des Schiebers (36; 136) zwischen der Energierückgewinnungs- und der Energiefreisetzungsstellung liegt.

3. Hydraulikkreis nach Anspruch 1 oder 2, **dadurch gekennzeichnet, daß** er mindestens eine elastische Rückstellvorrichtung (40) umfaßt, die geeignet ist, den Schieber (36; 136) permanent in seine Neutralstellung zurückzustellen.

4. Hydraulikkreis nach einem der Ansprüche 1 bis 3, **dadurch gekennzeichnet, daß** das Hydraulikventil (30; 130) eine erste Steuerkammer (38A; 138A) aufweist, die geeignet ist, durch einen ersten Steuerkanal (VC1) mit Fluid versorgt zu werden, um eine Bewegung des Schiebers (36; 136) in seine Energierückgewinnungsstellung zu bewirken, und eine zweite Steuerkammer (38B; 138B), die geeignet ist, durch einen zweiten Steuerkanal (VC2; VX') mit Fluid versorgt zu werden, um eine Bewegung des Schiebers (36; 136) in seine Energiefreisetzungsstellung zu bewirken, und **dadurch**, daß der Hydraulikkreis Magnetventilmittel (44, 46) umfaßt, die geeignet sind, in Abwesenheit eines Steuersignals (L44, L46) die zwei Steuerkanäle (VC1, VC2; VC1, VX'2) mit einer überdrucklosen Kammer (R) zu verbinden, bei Empfang des ersten Steuersignals (L44) den ersten Steuerkanal (VC1) mit einer Steuerfluidquelle (24) zu verbinden, und bei Empfang des zweiten Steuersignals (L46) den zweiten Steuerkanal (VC2; VX') mit der Steuerfluidquelle (24) zu verbinden.

5. Hydraulikkreis nach Anspruch 4, **dadurch gekennzeichnet, daß** die Magnetventilmittel ein erstes Steuermagnetventil (44) umfassen, das geeignet ist, in der Ruhestellung den ersten Steuerkanal (VC1) mit der überdrucklosen Kammer (R) zu verbinden, und in der aktivierten Stellung diesen ersten Kanal (VC1) mit der Steuerfluidquelle (24) zu verbinden, sowie ein zweites Steuermagnet (46), das geeignet ist, in der Ruhestellung den zweiten Steuerkanal (VC2, VX') mit der überdrucklosen Kammer (R) zu verbinden, und in der aktivierten Stellung diesen zweiten Kanal (VC2, VX') mit der Steuerfluidquelle (24) zu verbinden.

6. Hydraulikkreis nach Anspruch 5, **dadurch gekennzeichnet, daß** der Hilfskanal (VX') einer der Steuerkanäle ist.

7. Hydraulikkreis nach Anspruch 6, **dadurch gekennzeichnet, daß** die Magnetventilmittel geeignet sind, bei gleichzeitigem Empfang des ersten und zweiten Steuersignals (L44, L46), die zusammen gesendet wurden, die zwei Steuerkanäle (VX'; VC1) mit der Steuerfluidquelle (24) zu verbinden.

8. Hydraulikkreis nach Anspruch 5, **dadurch gekennzeichnet, daß** er ein Auskupplungsmagnetventil (48) umfaßt, das geeignet ist, eine Auskupplungsposition einzunehmen, in welcher es den Hilfskanal (VX) mit einer überdrucklosen Kammer (R) verbindet, und eine Einkupplungsposition, in welcher es den Hilfskanal (VX) mit der Kupplungsfluidquelle (24, 50) verbindet.

9. Hydraulikkreis nach einem der Ansprüche 1 bis 8, **dadurch gekennzeichnet, daß** der Innenraum des Gehäuses des oder der Hydraulikmotors/-motoren (10) unter Druck gesetzt ist.

10. Hydraulikkreis nach Anspruch 9, **dadurch gekennzeichnet, daß** der Innenraum des Gehäuses des Hydraulikmotors (10) über eine Drossel (26) mit der Kupplungsfluidquelle (24) verbunden ist.

11. Hydraulikkreis nach Anspruch 9 oder 10, **dadurch gekennzeichnet, daß** der Innenraum des Gehäuses des Hydraulikmotors (10) mit einem Sekundärspeicher (54) verbunden ist.

12. Hydraulikkreis nach einem der Ansprüche 1 bis 11, **dadurch gekennzeichnet, daß** die Niederdruckfluidquelle eine Hochleistungsquellenpumpe (16) umfaßt, deren Fluiddurchsatz ausreicht, um die Fluidversorgung mindestens eines Hydraulikmotors (10) zu gewährleisten, wenn dieser in der Energierückgewinnungskonfiguration bei Höchstdrehzahl ist, und **dadurch**, daß er Mittel (18) umfaßt, um die Hochleistungsquellenpumpe (16) zu aktivieren oder zu deaktivieren.

13. Hydraulikkreis nach Anspruch 12, **dadurch gekennzeichnet, daß** die Hochleistungsquellenpumpe (16) mit einer elektromagnetischen Kupplung (48) ausgestattet ist.

14. Hydraulikkreis nach Anspruch 13, **dadurch gekennzeichnet, daß** er einen regelbaren Druckbegrenzer (52) umfaßt, um den Druck im Niederdruckverbindungskanal (VB) zu variieren.

15. Steuerverfahren für einen Hydraulikkreis nach einem der Ansprüche 1 bis 14, mit dem ein Fahrzeug ausgestattet ist, das eine Antriebsvorrichtung aufweist, mit welcher mindestens ein Hydraulikmotor (10) mechanisch verbunden werden kann, **dadurch gekennzeichnet, daß** es mindestens die folgenden Steuerschritte umfaßt:
- das Senden des ersten Steuersignals (L44), um bei einer Verlangsamung des Fahrzeugs, das von der Antriebsvorrichtung angetrieben wird, eine Energierückgewinnungsphase durchzuführen, während welcher der mindestens eine Hydraulikmotor (10) eingekuppelt ist,
- das Abbrechen des Sendens des ersten Steuersignals (L44), um eine Ausgleichsphase durchzuführen, während welcher die Hauptversorgungs- und Auslaßleitungen (12, 14) miteinander verbunden sind,
- das Senden des zweiten Steuersignals (L46), um bei einer Beschleunigung des Fahrzeugs, das von der Antriebsvorrichtung und dem mindestens einen Hydraulikmotor gemeinsam angetrieben wird, eine Energiefreisetzungsphase durchzuführen, in welcher der Hydraulikmotor (10) eingekuppelt ist,
- das Abbrechen des Sendens des zweiten Steuersignals (L46), um eine Wartephase durchzuführen, in welcher die Hauptversorgungs- und Auslaßleitungen (12, 14) miteinander verbunden sind und in welcher der mindestens eine Hydraulikmotor (10) ausgekuppelt ist.

16. Verfahren nach Anspruch 15, **dadurch gekennzeichnet, daß** die Ausgleichsphase eine erste Periode umfaßt, während welcher der mindestens eine Hydraulikmotor (10) eingekuppelt bleibt, und **dadurch**, daß, wenn das Ende der ersten Periode festgestellt wird, auf diese erste Periode eine zweite Periode folgt, während welcher der mindestens eine Hydraulikmotor (10) ausgekuppelt ist und an deren Ende der mindestens eine Hydraulikmotor (10) erneut eingekuppelt wird.

17. Verfahren nach Anspruch 15 oder 16, **dadurch gekennzeichnet**, wobei zum Einkuppeln des mindestens einen Hydraulikmotors (10) der Hilfskanal (VX; VX') des Hydraulikventils (30; 130) mit der Kupplungsfluidquelle (24, 50) verbunden wird, **dadurch gekennzeichnet, daß** die Verbindung zwischen dem Hilfskanal (VX; VX') und der Kupplungsfluidquelle (24, 50) während mindestens einer von den Energierückgewinnungs- und -freisetzungsphasen aufrechterhalten wird.
